# EUROPEAN PATENT APPLICATION

(11) **EP 1 878 625 A2**
(43) Date of publication of application: **16.01.2008**
(21) Application number: 07013268.3
(22) Date of filing: 06.07.2007
(51) Int. Cl.: B60R 21/235

(54) **Side curtain air bag with polyurethane dispersion based coating**

(30) Priority: 10.07.2006 US 483997
(71) Applicant: Milliken & Company, Spartanburg, SC 29304 (US)
(72) Inventor: Keshavaraj, Ramesh, Peachtree City, GA 30269 (US); Michiels, Dany F., 9450 (BE)
(74) Representative: HOFFMANN EITLE

(57) **Abstract**

A side curtain air bag (36, 38) treated with a film forming polyurethane coating (43) that reduces the propensity for seam combing while simultaneously blocking permeability outboard of the seams (40) to a sufficient degree to provide gas retention over an extended period of time following pressurization.

## Description

### TECHNICAL FIELD

This invention relates generally to vehicle air bags and more particularly to a method of making side curtain air bag cushions and to such cushions adapted for prolonged inflation and formed from panels of material joined together by one or more seams.

### BACKGROUND OF THE INVENTION

An air bag safety restraint in the form of an inflatable restraining curtain disposed along the side of a vehicle between an occupant and window or door openings plays a well recognized role in preventing injury to the occupant during a collision event. Typically, such curtains are inflated rapidly by the pressure of a reaction gas released from an inflator at the outset of the collision event. This gas generation typically takes place when a gas-generating agent in the inflator induces a chemical reaction activated by a collision signal from a collision detecting sensor when deceleration of the vehicle exceeds a certain level. The gas which is generated by the inflator is then conveyed to the air bag curtain. Inflatable restraint curtains are typically deployed downwardly from a storage position along the roof rail so as to at least partially cover window and/or door openings across the side of the vehicle. The deployed curtain thus provides both a degree of cushioning restraint as well as a barrier preventing the occupant from being ejected from the vehicle. Due to the extended duration of a roll-over collision event where the vehicle may turn over several times, it is desirable for the curtain-type air bags to remain inflated for an extended period of time so as to maintain a degree of head protection and barrier restraint until the entire event is concluded. Preferably, such curtain-type restraint cushions remain inflated for about 6 seconds or more.

Air bag cushions formed by sewing together panels of fabric typically cannot maintain inflation for extended periods of time. Performance can be improved by applying substantial quantities of permeability blocking coating materials. However, applying sufficient coating weights to the fabric layers gives rise to substantial weight increase and bulk. Moreover, coatings that exhibit a good ability to lock down yarns so as to block gas flow across the fabric may impart stiffness in combination with enhanced levels of seam combing. In this regard it is to be understood that the term "seam combing" refers to the phenomenon wherein applied pressure causes the seaming threads to spread apart and thereby release additional gas pressure.

Since the gas release in a sewn air bag is predominately at the seams, one solution that has been utilized is to weave the air bag as a one piece structure on a Jacquard loom and to then apply a relatively heavy layer of permeability blocking coating to cover the entire structure including the woven in seams. While Jacquard weaving has provided bag structures meeting desired performance requirements, the practice is nonetheless relatively expensive and inefficient to carry out. Moreover, even with woven in seams, air bags such as curtain type bags that are required to maintain inflation for extended periods may still require relatively high weights of stiff coating materials.

### SUMMARY OF THE INVENTION

The present invention provides advantages and alternatives over the prior art. A film-forming polycarbonate-polyurethane water-dispersible composition is disposed across a surface of the curtain to reduce permeability thereby extending the period of inflation of the curtain after initial pressurization when the seams are placed in tension. The invention particularly provides side curtain air bag structures treated with an improved film forming aqueous coating that reduces the propensity for seam combing while simultaneously blocking permeability outboard of the seams to a sufficient degree to provide gas retention over an extended period of time following pressurization.

According to one aspect of the invention an inflatable air bag curtain structure is provided formed from panels of textile fabric or the like joined together along one or more sewn seams. The curtain is coated with a water-dispersible film forming polycarbonate polyurethane resin composition to cover both sewn seams and zones outboard of the sewn seams.

### BRIEF DESCRIPTION OF THE DRAWINGS

The accompanying drawings which are incorporated in and which constitute a portion of this specification illustrate an exemplary embodiment of the invention which, together with the detailed description set forth below will serve to explain the principles of the invention wherein;

FIG. 1 illustrates a cut-away view of a transportation vehicle illustrating an inflatable air bag cushion in deployment to the side of the occupant; and

FIG. 2 is a cut-through view of a generic seam construction securing together two panels with an overcoat of film forming resin;

### DESCRIPTION OF PREFERRED EMBODIMENTS

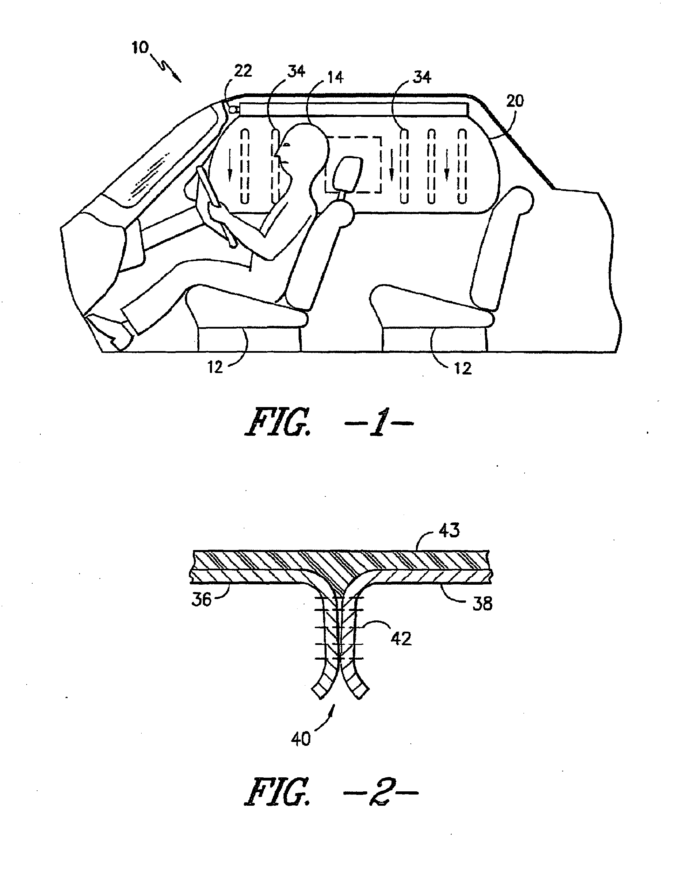

Reference will now be made to the drawings wherein, to the extent practical like elements are denoted by like reference numerals in the various views. Turning to FIG. 1 the interior of a transportation vehicle 10 is shown. As will be appreciated, the transportation vehicle may have any number of configurations such as a car, truck, van, sport utility vehicle or the like. Regardless of the actual vehicle configuration, it will include one or more rows of seats 12 for supporting an occupant 14.

As shown, the vehicle 10 includes an air bag in the form of an inflatable curtain 20 for use with an inflator 22 to protect the occupant during a prolonged roll-over collision event. In operation, upon inflation the inflatable curtain 20 deploys downwardly from a storage position along the roof rail of the vehicle 10 into the illustrated position to the side of the occupant 14. As the curtain 20 is inflated it undergoes a natural shortening in its length dimension thereby causing it to be held in tension. By maintaining this tension, the curtain 20 forms an effective resilient barrier preventing ejection of the occupant 14. Thus, in order to maintain the desired end-to-end tension in the curtain 20, it is desirable to maintain inflation for the entire duration of the roll-over event.

In practice, the curtain 20 may be formed from two opposing mirror image panels of material such as a woven textile fabric joined along a perimeter seam. Of course, any number of other construction practices may likewise be utilized. By way of example only, the panels may be portions of a single fabric blank that is folded over upon itself and seamed around open edges. As illustrated, additional adjoining seams may be applied at the interior of the curtain 20 so as to define an arrangement of so called zero length tethers 34 to control gas flow and deployment characteristics within the inflatable curtain 20. The perimeter and/or interior seams may have any construction as desired. By way of example only and not limitation, such seams may be sewn seams formed by passing sewing thread in a stitching arrangement between opposing panels. Other seam constructions including adhesive bonding seams, welded seams and the like may also be used if desired. Of course, it is to be understood that the illustrated curtain 20 is exemplary only and that any number of other curtain geometries as may be known to those of skill in the art are likewise applicable to the present invention.

By way of example only, and not limitation, an illustrative sewn seam construction such as may be used is illustrated in FIG. 2. While the seam is illustrated as utilizing multiple parallel sewing threads, such an arrangement is illustrative only and virtually any seamed construction may be utilized. For example, a single needle lock stitch may be utilized if desired. Moreover as will be appreciated, in order to facilitate explanation, various components of the seam are shown with enhanced dimensions and are thus not necessarily drawn to scale.

As shown, in the exemplary seam construction a first panel 36 formed from a blank of suitable construction material such as a woven fabric or the like is joined to a second panel 38 formed from a blank of suitable construction material such as a woven fabric or the like along a seam line 40 by suitable stitching threads 42. in the illustrated and potentially preferred arrangement, a relatively light weight coating 43 of an adherent permeability blocking composition as will be described further hereinafter is disposed across portions of the panels 36, 38. As will be appreciated, such coatings provide gas blockage across seamed and non-seamed portions of the formed air bag 20. In this regard, it is contemplated that the coating 43 may cover substantially the entire surface of the air bag 20. Of course, it is also contemplated that selected portions of the air bag 20 may also be uncoated if desired. The composition forming the coating 43 is preferably adapted to migrate substantially into the seam when applied so as to encapsulate at least a portion of the stitching threads 42 within the seam line 40.

In accordance with the present invention the coating 43 is a water dispersible aliphatic polycarbonate polyurethane resin composition. In the past, it has been common to utilize silicone based coatings. However, one deficiency with such silicone coatings is the relatively high coating weight required to provide good gas retention for prolonged periods. Another approach has been to use solvent based systems such as solvent dispersed polyurethanes and the like. By way of example, representative solvent based polyurethane systems are believed to disclosed in one or more of U.S. patents 6,770,578; 6,753,275; 6,734,123; 6,645, 565; 6,350,709; 6,740,607; 6,641,686; 6,458,724; 6,455,449; 6,239,046 (all incorporated herein by reference). However, solvent based systems may be difficult to work with due to the emission of volatile organic compounds and the residual VOC in the fabric. Traditional water disperse polyurethanes have generally been considered unsuitable due to an inability to provide a desired combination of low stiffness, yarn lock down and resistance to seam combing while substantially maintaining tensile strength over extended temperature and humidity aging conditions. However, the water dispersed aliphatic polycarbonate polyurethane resin compositions contemplated in accordance with the instant invention have been found to satisfy this combination of required characteristics.

According to the instant invention, the coating 43 is preferably formed from an aqueous dispersion of a polycarbonate polyurethane composition. In this regard, a potentially preferred polycarbonate polyurethane composition is formed by a condensation reaction of a polyisocyanate and a polyol wherein the polyol component contains a polycarbonate polyol to provide a polycarbonate backbone within the urethane prepolymer. It has been found that the polyisocyanate used is preferably an aliphatic isocyanate so as to promote color stability during ageing and resistance to dry and humid aging at high temperatures. By way of example only, and not limitation, one such polycarbonate polyurethane composition is believed to be manufactured by Cytec Company under the trade designation P-925/ IW3475. The aqueous dispersion preferably also includes about 5 parts of a thickener such as WT56 for viscosity adjustment and about 1 part of a water based silicone slip agent such as Dow 84 or 61 or 2-1846 or Ludox XSM-30 or Wacker C792A and a cross linker such as Carbodiimide based Rhodocoat XEZ-M 502 from Rhodia, end blocked isocynate or a free isocynate like XE 410 from Cytec or a Melamine formaldehyde crosslinker like DWX 185, Ucecoat 730. In order to provide desired flow blocking characteristics, such dispersions are preferably applied across portions of the air bag 20 at levels of about 10 to about 50 grams per square meter and most preferably at about 50 grams per square meter on a dry weight basis. The coating composition is thereafter cured in a tenter. Alternatively, the coatings may be cured by other known energy sources including without limitation, ultraviolet irradiation, infrared irradiation, electron beam heating and the like.

Films formed from the contemplated coating compositions are generally characterized by reduced tensile strength and elongation relative to traditional solvent based polycarbonate polyurethanes. By way of example only, and not limitation, a comparative analysis of films cast from the aqueous dispersion materials as described above relative to films of similar weights formed from traditional solvent based polycarbonate polyurethanes such as an aromatic polycarbonate polyurethane marketed by the Cytec under the trade designation DTM 586 and an aliphatic polycarbonate polyurethane marketed by the Cytec company under the trade designation FN 995 is set forth in Table 1 below.

**TABLE 1**

| Material Tested | Tensile Strength Before Ageing | Tensile Strength After Thermal Ageing (105°C/ 14 days) | Tensile Strength After Humidity Ageing (80°C & 95% RH/ 14 days) | Elongation To Break Before Ageing | Elongation To Break After Thermal Ageing (105°C/ 14 days) | Elongation To Break After Humidity Ageing (80°C & 95% RH/ 14 days) |
|---|---|---|---|---|---|---|
| DTM 586 | 53 MPa | 47 MPa | 36 MPa | 408% | 441% | 557% |
| Solvent Based Aromatic Polycarbonate Polyurethane | | | | | | |
| FN 995 | 38 MPa | 35 MPa | 50 MPa | 319% | 341% | 438% |
| Solvent Based Aliphatic Polycarbonate Polyurethane | | | | | | |
| Aqueous Polycarbonate Polyurethane Composition | 17 MPa | 21 MPa | 21 MPa | 206% | 193% | 161% |

In spite of the substantially reduced tensile strength and elongation character, it has nonetheless been found that a coating of water dispersed polycarbonate polyurethane as described above nonetheless provides excellent gas retaining characteristics while retaining substantial stability following thermal and humidity ageing.
In this regard, testing indicates that a coating of water dispersed polycarbonate polyurethane as described above may actually provide substantially improved gas retention performance relative to a number of commercial solvent based coating systems.

In order to evaluate pressure retention performance, side curtain air bags were coated with similar dry add-on weights of the aqueous polycarbonate polyurethane composition as described above and several different commercial coating compositions. The comparative compositions were RU 40-528, a polyether polyurethane material marketed by Stahl USA; RU 41-710, a Aromatic Polyether polyurethane material marketed by Stahl USA; Dow YS 3000, a MDI based polyether polyurethane material marketed by Dow Chemical; Dow YM 2000, a aromatic polyether material marketed by Dow Chemical. The coated curtains were then pressurized to a standard pressure of 140 kPa. The gas supply was terminated and pressure within the curtains was then measured at 6 seconds and 12 seconds to determine the level of gas leakage. The results are set forth in Table 2 below.

**TABLE 2**

| Material Tested | Coating Weight (grams per square meter) | Retained Pressure at 6 seconds (kPa) | Retained Pressure at 12 seconds (kPa) | Polyurethane Type | Tensile Strength (MPa) | % Elongation |
|---|---|---|---|---|---|---|
| RU 40-528 | 52 | 23.2 | 4.7 | Polyether based | 35.6 | 400 |
| RU 41-710 | 50 | 32.6 | 11.9 | PPG polyether based | 48.47 | 640 |
| YS 3000 | 50 | 39.6 | 13.3 | MDI based polyether | 14.9 | 700 |
| YM 2000 | 51 | 61.3 | 0 | Aromatic polyether | 17.9 | 500 |
| P925 | 50.5 | 124.4 | 115.2 | Aliphatic polycarbon ate based | 17 | 206 |

As will be appreciated, the above data reflect that a side curtain cushion utilizing a coating of water dispersed polycarbonate polyurethane is characterized by substantial pressure retention over prolonged periods despite relatively low tensile strength and elongation as shown in Table 1. Tensile strength of the water based polyurethane in the Table 1 are about 3X to 4X stronger compared to traditional silicone based coating and it is believed that the combination of physical characteristics of the water dispersed polyurethane may aid in avoiding stress concentrations that promote gas leakage at the seams.

While the present invention has been illustrated and described in relation to certain potentially preferred embodiments and practices, it is to be understood that the illustrated and described embodiments and practices are illustrative only and that the present invention is in no event to be limited thereto. Rather, it is fully contemplated that modifications and variations to the present invention will no doubt occur to those of skill in the art upon reading the above description and/or through practice of the invention. Therefore, it is intended that the present invention shall extend to all such modifications and variations as may incorporate the broad aspects of the invention in the full scope thereof.

By way of example only, and not limitation such variations may include polyurethane hybrids where a combination of different polyurethanes may be incorporated, provided the major component is still based on polycarbonate polyurethane. Likewise, modifications incorporating copolymers are also contemplated. By way of further nonlimiting example, it is contemplated that for non-blocking reasons, providing a non-blocking means on top of the coating would still be within the broad aspects of the invention in the full spirit and scope thereof. Such non-blocking means can be achieved by talc or silica or clay type materials. Such non-blocking means can be incorporated onto the polyurethane itself in a substantially monolithic structure or can be a separate layer.

## Claims

1. A method of manufacturing an inflatable air bag curtain (20) for occupant protection in a transportation vehicle, the method comprising the steps of:
(a) providing an air bag curtain (20) comprising: a first portion (36) comprising a textile fabric and a second portion (38) comprising a textile fabric, wherein the first portion and the second portion are adjoined together by at least one connective seam (40);
(b) applying a water-dispersed film-forming coating composition (43) across at least a part of the first portion (36), a part of the second portion (38) and a part of the connective seam (40); wherein the coating composition (43) comprises a polyurethane dispersion; and
(c) curing the applied coating to a substantially dry state.

2. The method as recited in claim 1, wherein said at least one connective seam (40) comprises a perimeter seam.

3. The method as recited in claim 1 or 2, wherein said at least one connective seam (40) comprises a tethering seam (34) disposed at an interior portion of a curtain perimeter seam.

4. The method as recited in any of claims 1 to 3, wherein the coating composition (43) further comprises a silicone slip agent.

5. The method as recited in any of claims 1 to 4, wherein the coating composition further comprises a thickener.

6. The method as recited in any of claims 1 to 5, wherein the coating composition further comprises a cross linker.

7. The method as recited in any of claims 1 to 6, wherein the coating further comprises a secondary non-blocking means.

8. The method as recited in any of claims 1 to 7, wherein the coating comprises a polycarbonate polyurethane dispersion.

9. The method as recited in any of claims 1 to 8, wherein the coating comprises polycarbonate polyurethane and copolymers.

10. The method as recited in any of claims 1 to 9, wherein the coating is a hybrid polyurethane dispersion.

11. The method as recited in any of claims 1 to 10, wherein during the curing step the coating is dried by an energy source selected from at least one of hot air, ultraviolet irradiation, infrared irradiation or electron beam heating.

12. The method as recited in any of claims 1 to 11, wherein the coating composition is applied on a dry weight basis at a level of about 10 to about 50 grams per square meter.

13. An inflatable air bag curtain (20) for occupant protection in a transportation vehicle, the curtain comprising:
a first fabric portion (36) and a second fabric portion (38), wherein the first fabric portion (36) and the second fabric portion (38) are adjoined together by at least one connective seam (40); and a coating (43) disposed in film-forming relation across at least a part of the first fabric portion (36), a part of the second fabric portion (38) and a part of the connective seam (40); wherein the coating (43) composition comprises a polyurethane dispersion.

14. An inflatable airbag as recited in claim 13, wherein the curtain (20) with the applied coating composition (43) exhibits a pressure retention level such that an initial pressure of 140 kPa within the curtain decays to not less than about 50 kPa after a period of 12 seconds measured using air as the inflation gas.

15. An inflatable airbag as recited in any of claims 13 or 14, wherein the coating is a monolithic coating that contains a non-blocking means.

16. An inflatable airbag as recited in any of claims 13 to 15, wherein said airbag is a woven airbag.

17. An inflatable airbag as recited in any of claims 13 to 15, wherein said airbag is a sewn airbag.

18. An inflatable airbag as recited in any of claims 13 to 15, wherein said airbag is a sewn and sealed airbag.

19. An inflatable airbag as recited in any of claims 15 to 18, wherein the non-blocking means comprises one of talc, silica or clay based materials.

20. An inflatable airbag as recited in any of claims 13 to 19, wherein the polyurethane dispersion is a hybrid polyurethane dispersion.

21. An inflatable airbag as recited in any of claims 13 to 20, wherein the polyurethane dispersion is based on polycarbonate polyurethane dispersion.
